# EUROPÄISCHE PATENTSCHRIFT

(11) **EP 3 019 878 B1**
(45) Veröffentlichungstag und Bekanntmachung des Hinweises auf die Patenterteilung: **17.01.2018**
(21) Anmeldenummer: 14739678.2
(22) Anmeldetag: 09.07.2014
(51) Int. Cl.: G01P 3/44, F16H 59/36

(54) **DREHZAHLMESSVORRICHTUNG FÜR EIN GETRIEBE UND VERFAHREN ZUR DREHZAHLMESSUNG**
ROTATIONAL SPEED MEASURING DEVICE FOR A TRANSMISSION AND METHOD FOR MEASURING ROTATIONAL SPEED
DISPOSITIF DE MESURE DE LA VITESSE DE ROTATION D'UN MÉCANISME ET PROCÉDÉ DE MESURE DE VITESSE DE ROTATION

(30) Priorität: 10.07.2013 DE 102013011532
(43) Veröffentlichungstag der Anmeldung: 18.05.2016
(73) Patentinhaber: Audi AG, 85045 Ingolstadt (DE)
(72) Erfinder: FLEISCHMANN, Hans-Peter, 85134 Stammham (DE)
(74) Vertreter: Lehle, Josef
(86) Internationale Anmeldenummer: PCT/EP2014/001883
(87) Internationale Veröffentlichungsnummer: WO 2015/003805

(56) Entgegenhaltungen:
- EP-A1- 0 462 435
- EP-A1- 0 747 709
- DE-A1- 10 214 478
- US-A1- 2005 057 244

## Beschreibung

Die Erfindung betrifft eine Drehzahlmessvorrichtung für ein Getriebe zur Messung der Drehzahl an koaxial angeordneten Antriebswellen gemäß dem Oberbegriff des Anspruchs 1 sowie ein Verfahren zur Drehzahlmessung mit den Merkmalen des Anspruchs 9. EP747709 offenbart die Merkmale des Oberbegriffes der Ansprüche 1 und 8. Bei in Kraftfahrzeugen verwendeten Doppelkupplungsgetrieben sind die Schaltgruppen auf zwei Teilgetriebe verteilt, welche wechselweise mit dem Antriebstrang gekoppelt werden. Für den Betrieb und die Steuerung des Getriebes ist es notwendig, die Drehzahl beider Teilgetriebe zu erfassen. Die Antriebswellen der Teilgetriebe sind häufig koaxial angeordnet, wobei eine Hohlwelle und eine in dieser einliegende weitere Welle die Antriebswellen des Teilgetriebes bilden.
Ein derartiges Doppelkupplungsgetriebe ist aus der DE 102 14 478 B4 bekannt, welches eine Hohlwelle und eine in dieser gelagerte weitere Welle besitzt. Damit an der innenliegenden Welle eine Drehzahlmessung vorgenommen werden kann, ist diese aus der Hohlwelle herausgeführt. An dem herausgeführten Bereich der innenliegenden Welle ist ein Drehzahlgeber und ein Drehzahlsensor positioniert.
Der Erfindung liegt die Aufgabe zugrunde, eine Drehzahlmessvorrichtung für ein Getriebe, vorzugsweise für ein Doppelkupplungsgetriebe mit koaxial angeordneten Antriebswellen so auszubilden, dass eine möglichst platzsparende Drehzahlmessung an den Antriebswellen möglich ist.

Die Lösung dieser Aufgabe wird mit den Merkmalen des Anspruchs 1 erhalten. Besonders vorteilhafte Weiterbildungen der Erfindung sind in den Unteransprüchen 2 bis 8 gekennzeichnet.

Gemäß dem kennzeichnenden Teil des Anspruchs 1 besitzt die Hohlwelle wenigstens eine Öffnung und an der in der Hohlwelle einliegenden Welle ist ein durch die Öffnung der Hohlwelle detektierbarer Drehzahlgeber angeordnet. Mittels eines Drehzahlsensors kann somit im Bereich der Öffnung der Hohlwelle die Drehzahl der innenliegenden Welle am Drehzahlgeber abgegriffen bzw. gemessen werden. Dadurch ist eine sehr platzsparende Anordnung beider Drehzahlgeber und Drehzahlsensoren für die innenliegende Welle und die Hohlwelle möglich, so dass die Drehzahlsensoren sich besonders platzsparend in einem gemeinsamen Sensorgehäuse anbringen lassen.

Ein weiterer Vorteil besteht darin, dass die Positionierung der Drehzahlgeber und Drehzahlsensoren sehr flexibel ist, da über die gesamte Länge der Hohlwelle an einer gewünschten bzw. optimalen Position die Öffnung für die Drehzahlmessung an der innenliegenden Welle angeordnet werden kann. Damit ist es auch möglich, die Anordnung der Drehzahlgeber und Drehzahlsensoren in kurzer Entfernung zu einem elektronischen Getriebesteuergerät anzuordnen.

Besonders vorteilhaft ist es, an der Hohlwelle mehrere Öffnungen für die Drehzahlmessung an der innenliegenden Welle vorzusehen, wobei bevorzugt drei Öffnungen in gleichen Winkelabständen an der Hohlwelle vorgesehen sind. Eine gleichmäßige Verteilung der Öffnungen an dem Umfang der Hohlwelle führt insbesondere zu keiner Unwucht. Außerdem sind aus Stabilitätsgründen mehrere kleinere Öffnungen vorteilhafter als eine entsprechend große Öffnung an der Hohlwelle.

Bei gleichmäßig verteilt angeordneten Öffnungen können diese sich jeweils über einen Drehwinkelbereich von beispielsweise wenigstens 30 Grad am Umfang der Hohlwelle erstrecken, wodurch sich eine ausreichende Öffnungslänge und damit eine ausreichende Messdauer für die Drehzahlmessung an der innenliegenden Welle ergibt.

Der für die Drehzahlmessung an der innenliegenden Welle vorgesehene Drehzahlsensor erfasst vorzugsweise in Verbindung mit einer Messelektronik den Anfang und das Ende der den Drehzahlsensor passierenden Öffnung. Damit kann die Messelektronik zwischen Anfang und Ende der Öffnung die Drehzahlmessung am Drehzahlgeber der innenliegenden Welle vornehmen, wodurch sichergestellt ist, dass tatsächlich auch nur vom Drehzahlgeber der innenliegenden Welle ausgehende Messsignale zur Drehzahlmessung verwendet werden.

Die Drehzahlgeber und Drehzahlsensoren für die Hohlwelle und die innenliegende Welle können wie bereits erwähnt sehr platzsparend dicht beieinander angeordnet werden. Vorzugsweise befinden sich die beiden Drehzahlsensoren in einem gemeinsamen Sensorgehäuse. Darüber hinaus besteht aber auch die Möglichkeit, die Drehzahlsensoren für beide Wellen direkt in einem ohnehin vorhandenen Getriebesteuergerät anzuordnen, wodurch eine besonders platzsparende und kostengünstige Ausführung erzielt wird.

Die erfindungsgemäße Drehzahlmessvorrichtung ist vorzugsweise für den Einsatz in einem Kraftfahrzeug vorgesehen, das ein Doppelkupplungsgetriebe mit zwei Teilgetrieben besitzt, die wechselweise mit dem Antriebsstrang des Kraftfahrzeugs koppelbar sind.

Der Erfindung liegt die weitere Aufgabe zugrunde, ein Verfahren zur Drehzahlmessung an koaxial angeordneten Antriebswellen eines Getriebes, vorzugsweise eines Doppelkupplungsgetriebes zu schaffen, mit dem eine platzsparende und genaue Drehzahlmessung möglich ist.

Die Lösung der das Verfahren betreffenden Aufgabe wird durch die im Anspruch 9 angegebenen Merkmale erhalten. Bevorzugte Weiterbildungen des Verfahrens sind in den Unteransprüchen 10 bis 12 offenbart.

Gemäß dem kennzeichnenden Teil des Patentanspruch 9 wird die Drehzahl einer in der Hohlwelle einliegenden Welle von einer Drehzahlmesseinrichtung durch eine Öffnung in der Hohlwelle gemessen, wobei die Drehzahlmesseinrichtung bei sich drehender Hohlwelle den Anfang der den Messbereich der Drehzahlmesseinrichtung durchlaufenden Öffnung erkennt und daraufhin mit der Messung der Drehzahl an der innenliegenden Welle beginnt. Die Drehzahlmesseinrichtung kann den Beginn der Öffnung anhand einer wiederholt auftretenden signifikanten Messsignalveränderung feststellen, da mit dem Eintritt der Öffnung in den Messbereich der Drehzahlsensoren diese den Drehzahlgeber der innenliegenden Welle erfassen und dadurch ein entsprechendes Sensorsignal empfangen können. Es besteht aber auch die Möglichkeit, einen separaten Sensor anzuordnen, der ausschließlich den Anfang und das Ende der durchlaufenden Öffnung erfasst. Durch die Festlegung des Beginns der Messung am Drehzahlgeber der inneren Welle kann sichergestellt werden, dass eine genaue Drehzahlerfassung an der innenliegenden Welle erfolgt. Dabei kann in Abhängigkeit von der jeweils aktuellen Drehzahl der Hohlwelle und der Umfangslänge der vorgesehenen Öffnungen das Ende des zugehörigen Messzeitraums rechnerisch bestimmt werden. Es besteht aber auch die Möglichkeit, das Ende des Messzeitraums dadurch festzulegen, dass mittels eines Sensors das Ende der durchlaufenden Öffnung erkannt wird.

Es besteht die vorteilhafte Möglichkeit, die Drehzahl der Hohlwelle mittels Drehzahlsensoren zu messen, die die durchlaufenden Öffnungen bzw. deren Öffnungsbegrenzungen als Sensorsignal erfassen. Es kann aber auch in geringem Abstand von der oder den vorgesehenen Öffnungen ein zusätzlicher Drehzahlgeber an der Hohlwelle angebracht sein, an dem Drehzahlsensoren die Drehzahl der Hohlwelle abgreifen. Die Verwendung eines separaten Drehzahlgebers hat den Vorteil, dass dieser eine etwas höhere Messgenauigkeit ermöglicht, da ein Drehzahlgeber eine entsprechend höhere Anzahl von Messimpulsen für die Drehzahlmessung bereitstellen kann.

Die Erfindung wird nachfolgend anhand von in der Zeichnung dargestellten Ausführungsbeispielen näher erläutert.

Es zeigen:
- Fig. 1: einen Querschnitt im Bereich der Antriebswellen eines Doppelkupplungsgetriebes eines Kraftfahrzeugs,
- Fig. 2: einen Längsschnitt koaxial angeordneter Antriebswellen eines Doppelkupplungsgetriebes und
- Fig. 3: eine Drehzahlmesseinrichtung mit Drehzahlsensoren an einer Hohlwelle und einer darin einliegenden Welle eines Doppelkupplungsgetriebes.

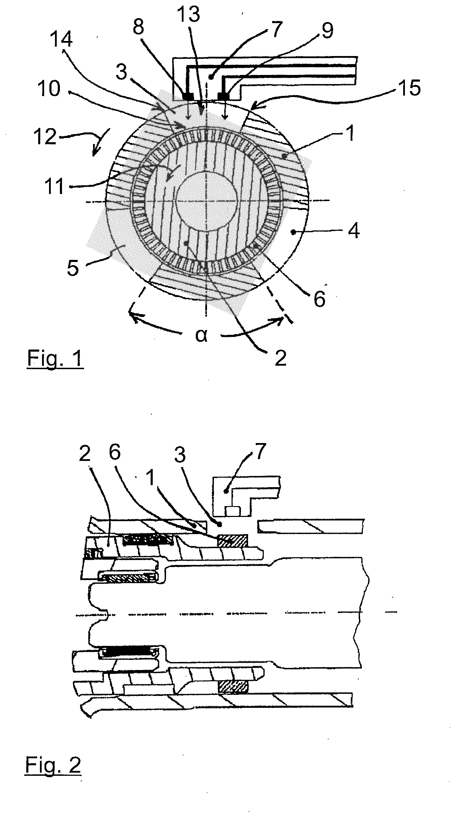

Die Schnittansicht von Figur 1 zeigt eine in einer Hohlwelle 1 einliegende Welle 2, die Antriebswellen eines hier nicht dargestellten Doppelkupplungsgetriebes sind. Die koaxial zueinander angeordneten Wellen 1, 2 können mittels des Doppelkupplungsgetriebes wahlweise mit einem Antriebstrang eines Kraftfahrzeugs verbunden werden, was an sich bekannt und nicht Gegenstand der vorliegenden Erfindung ist.

An der Hohlwelle 1 sind insgesamt drei Öffnungen 3 bis 5 in gleichen Winkelabständen α angeordnet. Außerdem ist jede Öffnung 3 bis 5 als Langloch mit jeweils gleicher Umfangslänge und damit auch mit gleichem Öffnungswinkel ausgebildet.

Auf der innenliegenden Welle 2 ist ein Drehzahlgeber 6 befestigt, dessen Drehzahl von einem außerhalb der Hohlwelle 1 angeordneten Drehzahlsensor 7 gemessen wird. Der Drehzahlsensor 7 kann als optischer Sensor mit zwei optischen Elementen 8, 9 ausgebildet sein, die ein am Drehzahlgeber 6 angeordnetes optisches Raster 10 abtasten, welches aus Kerben, Zähnen oder einer sonstigen optisch abtastbaren Unterteilung bestehen kann.

Drehen sich beide Wellen 1, 2 entsprechend den Pfeilrichtungen 11, 12, so durchlaufen die Öffnungen 3 bis 5 aufeinanderfolgend den unterhalb des Drehzahlsensors 7 befindlichen Messbereich 13. Sobald die jeweilige Öffnung, in diesem Fall die Öffnung 3, in den Messbereich 13, gelangt, kann der Drehzahlsensor 7 am Drehzahlgeber 6 die Drehzahl der einliegenden Welle 2 messen, und zwar so lange bis die Öffnung 3 den Messbereich 13 wieder verlässt. Der Beginn des Messzeitraums, in welchem der Drehzahlsensor 7 die Drehzahl am Drehzahlgeber 6 messen kann, wird durch den Anfang 14 und das Ende 15 und die Drehzahl der Hohlwelle 1 festgelegt. Eine in Figur 1 nicht dargestellte Messelektronik kann den Messzeitraum anhand der Drehzahl der Hohlwelle 1 bestimmen, wenn der Durchmesser und die Umfangslänge der jeweiligen Öffnung 3 bis 5 bekannt sind. Grundsätzlich besteht aber auch die Möglichkeit, dass mittels Sensoren der Beginn und das Ende des Messzeitraums ermittelt wird, indem sensorisch der Eintritt der jeweiligen Öffnung 3 bis 5 in den Messbereich 13 detektiert wird. In entsprechender Weise kann dann auch das Ende des Messzeitraums sensorisch bestimmt werden.

In der Darstellung von Figur 2 sind eine Hohlwelle 1 mit einer innenliegenden Welle 2 ersichtlich. Die Öffnung 3 befindet sich in Figur 2 in der oberen Position, in der der Drehzahlsensor 7 den auf der innenliegenden Welle 2 angebrachten Drehzahlgeber 6 abtasten kann.

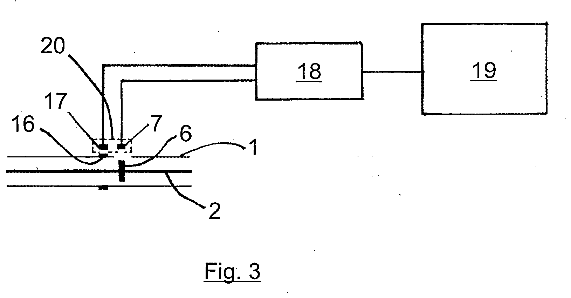

Die schematische Darstellung von Figur 3 zeigt eine Hohlwelle 1 mit innenliegender Welle 2, an denen Sensoren 7, 17 dicht nebeneinanderliegend angeordnet sind. Korrespondierend zu den Drehzahlsensoren 7, 17 sind an der innenliegenden Welle 2 ein Drehzahlgeber 6 und an der Hohlwelle 1 ein weiterer Drehzahlgeber 16 angeordnet.

Die von den Drehzahlsensoren 7, 17 erfassten Sensorsignale werden einer Messelektronik übermittelt, die hier als Drehzahlmessgerät 18 bezeichnet ist. Das Drehzahlmessgerät 18 wertet die von den Drehzahlsensoren 7, 17 empfangenen Sensorsignale aus und bestimmt daraus die Drehzahlen für die Hohlwelle 1 und die innenliegende Welle 2 und übermittelt die Drehzahlen an ein Getriebesteuergerät 19.

Die Drehzahlsensoren 7, 17 sind in Figur 3 andeutungsweise in einem gemeinsamen Sensorgehäuse 20 zusammengefasst. Es besteht aber auch die Möglichkeit, dass die Drehzahlsensoren 7, 17 zusammen mit dem Drehzahlmessgerät 18 und dem Getriebesteuergerät 19 eine Messgeräteeinheit bilden, die am oder im Doppelkupplungsgetriebe eines Kraftfahrzeugs angeordnet ist.

## Patentansprüche

1. Drehzahlmessvorrichtung für ein Getriebe zur Messung der Drehzahl an koaxial angeordneten Antriebswellen, von denen eine erste Antriebswelle als innenliegende Welle (2) in einer zweiten, als Hohlwelle (1) ausgebildeten Antriebswelle einliegt, wobei die Hohlwelle (1) wenigstens eine Öffnung (3 bis 5) hat, wobei an der innenliegenden Welle (2) ein durch die Öffnung (3 bis 5) der Hohlwelle (1) detektierbarer Drehzahlgeber (6) angeordnet ist, und wobei außerhalb der Hohlwelle (1) ein Drehzahlsensor (7) angeordnet ist, mittels dessen die Drehzahl am Drehzahlgeber (6) abgreifbar ist, **dadurch gekennzeichnet, dass** der Drehzahlsensor (7) mit einer Messelektronik verbunden ist, die bei sich drehender Hohlwelle (1) den Anfang (14) und das Ende (15) einer den Drehzahlsensor (7) passierenden Öffnung (3) erfasst.

2. Drehzahlmessvorrichtung nach Anspruch 1, **dadurch gekennzeichnet, dass** in gleichen Winkelabständen (α) am Umfang der Hohlwelle (1) drei Öffnungen (3 bis 5) vorgesehen sind.

3. Drehzahlmessvorrichtung nach einem der Ansprüche 1 oder 2, **dadurch gekennzeichnet, dass** sich jede Öffnung (3 bis 5) über einen Winkelbereich von wenigstens 30 Grad am Umfang der Hohlwelle (1) erstreckt.

4. Drehzahlmessvorrichtung nach einem der vorhergehenden Ansprüche, **dadurch gekennzeichnet, dass** ein Drehzahlgeber (16) und ein Drehzahlsensor (17) zur Messung der Drehzahl an der Hohlwelle (1) in geringem räumlichen Abstand von dem Drehzahlgeber (6) und dem Drehzahlsensor (7) der innenliegenden Welle (2) angeordnet sind.

5. Drehzahlmessvorrichtung nach Anspruch 4, **dadurch gekennzeichnet, dass** die Drehzahlsensoren (7, 17) für die innenliegende Welle (2) und die Hohlwelle (1) in einem gemeinsamen Sensorgehäuse (20) angeordnet sind.

6. Drehzahlmessvorrichtung nach Anspruch 5, **dadurch gekennzeichnet, dass** die Drehzahlsensoren (7, 17) mit zugehöriger Messelektronik in einem Getriebesteuergerät (19) angeordnet sind.

7. Drehzahlmessvorrichtung nach einem der vorhergehenden Ansprüche, **dadurch gekennzeichnet, dass** das Getriebe ein Doppelkupplungsgetriebe ist, welches zwei Teilgetriebe umfasst, die wechselweise mit dem Antriebsstrang eines Kraftfahrzeugs koppelbar sind.

8. Verfahren zur Drehzahlmessung an koaxial angeordneten Antriebswellen eines Getriebes unter Verwendung einer Drehzahlmesseinrichtung, die durch wenigstens eine Öffnung (3 bis 5) in einer Hohlwelle (1) die Drehzahl einer in der Hohlwelle (1) einliegenden innenliegenden Welle (2) misst, **dadurch gekennzeichnet, dass** die Drehzahlmesseinrichtung bei sich drehender Hohlwelle (1) den Anfang (14) der den Messbereich (13) der Drehzahlmesseinrichtung durchlaufenden Öffnung (3) erkennt und daraufhin mit der Messung der Drehzahl an der innenliegenden Welle (2) beginnt und dass die Drehzahlmesseinrichtung das Ende (15) der den Messbereich (13) durchlaufenden Öffnung feststellt und daraufhin die Messung der Drehzahl beendet.

9. Verfahren nach dem Anspruch 8, **dadurch gekennzeichnet, dass** die Drehzahlmesseinrichtung das Ende (15) der dem Messbereich (13) durchlaufenden Öffnung (3) rechnerisch unter Berücksichtigung der Drehzahl und des Durchmessers der Hohlwelle (1) und der Umfangslänge bzw. des Öffnungswinkels der Öffnung (3) ermittelt.

10. Verfahren nach einem der Ansprüche 8 bis 9, **dadurch gekennzeichnet, dass** für die Messung der Drehzahl an der Hohlwelle (1) die an ihr vorgesehenen Öffnungen (3 bis 5) als Drehzahlgeber verwendet werden.

## Claims

1. Rotational speed measuring device for a transmission for measuring the rotational speed of coaxially arranged drive shafts, of which a first drive shaft as inner shaft (2) rests in a second drive shaft formed as a hollow shaft (1), wherein the hollow shaft (1) has at least one opening (3 to 5), wherein arranged on the inner shaft (2) is a rotational speed sensor (6) detectable through the opening (3 to 5) of the hollow shaft (1), and wherein arranged outside the hollow shaft (1) is a tacho (7) by means of which the rotational speed can be picked off at the rotational speed sensor (6), **characterised in that** the tacho (7) is connected to an electronic measuring device which, when the hollow shaft (1) is rotating, detects the start (14) and the end (15) of an opening (3) passing the tacho (7).

2. Rotational speed measuring device according to.claim 1, **characterised in that** three openings (3 to 5) are provided at equal angular distances (α) on the circumference of the hollow shaft (1).

3. Rotational speed measuring device according to any one of claims 1 or 2, **characterised in that** each opening (3 to 5) extends over an angular range of at least 30 degrees on the circumference of the hollow shaft (1).

4. Rotational speed measuring device according to any one of the preceding claims, **characterised in that** a rotational speed sensor (16) and a tacho (17) for measuring the rotational speed of the hollow shaft (1) are arranged at a short spatial distance from the rotational speed sensor (6) and the tacho (7) of the inner shaft (2).

5. Rotational speed measuring device according to claim 4, **characterised in that** the tachos (7, 17) for the inner shaft.(2) and the hollow shaft (1) are arranged in a common sensor housing (20).

6. Rotational speed measuring device according to claim 5, **characterised in that** the tachos (7, 17) are arranged with associated electronic measuring devices in a transmission control unit (19).

7. Rotational speed measuring device according to any one of the preceding claims, **characterised in that** the transmission is a dual clutch transmission comprising two partial transmissions which can be coupled alternately to the drive train of a motor vehicle.

8. Method for measuring the rotational speed of coaxially arranged drive shafts of a transmission using a rotational speed measuring device which measures the rotational speed of an inner shaft (2) resting in a hollow shaft through at least one opening (3 to 5) in a hollow shaft (1), **characterised in that** when the hollow shaft (1) is rotating, the rotational speed measuring device identifies the start (14) of the opening (3) passing through the measuring range (13) of the rotational speed measuring device and then begins measuring of the rotational speed of the inner shaft (2), and **in that** the rotational speed measuring device determines the end (15) of the opening passing through the measuring range (13) and then ends measuring of the rotational speed.

9. Method according to claim 8, **characterised in that** the rotational speed measuring device determines the end (15) of the opening (3) passing through the measuring range (13) by calculation, considering the rotational speed and the diameter of the hollow shaft (1) and the circumferential length or the opening angle of the opening (3).

10. Method according to any one of claims 8 to 9, **characterised in that** for measuring the rotational speed of the hollow shaft (1), the openings provided (3 to 5) provided thereon are used as the tacho.

## Revendications

1. Dispositif de mesure de la vitesse de rotation pour un mécanisme de mesure de la vitesse de rotation d'arbres de commande agencés coaxialement, dont un premier arbre de commande pénètre comme arbre intérieur (2) dans un second arbre de commande conformé en arbre creux (1), dans lequel l'arbre creux (1) présente au moins une ouverture (3 à 5), dans lequel est agencé sur l'arbre intérieur (2) un transmetteur de vitesse de rotation (6) détectable à travers l'ouverture (3 à 5) de l'arbre creux (1) et dans lequel est agencé, à l'extérieur de l'arbre creux (1), un capteur de vitesse de rotation (7) au moyen duquel la vitesse de rotation,peut être saisie sur le transmetteur de vitesse de rotation (6), **caractérisé en ce que** le capteur de vitesse de rotation (7) est connecté à une électronique de mesure qui détecte, lors de la rotation de l'arbre creux (1), le début (14) et la fin (15) d'une ouverture (3) passant à travers le capteur de vitesse de rotation (7).

2. Dispositif de mesure de la vitesse de rotation selon la revendication 1, **caractérisé en ce que** trois ouvertures (3 à 5) sont prévues à intervalles angulaires égaux (α) sur la périphérie de l'arbre creux (1).

3. Dispositif de mesure de la vitesse de rotation selon l'une quelconque des revendications 1 ou 2, **caractérisé en ce que** chaque ouverture (3 à 5) s'étend sur une plage angulaire d'au moins 30 degrés sur la périphérie de l'arbre creux (1).

4. Dispositif de mesure de la vitesse de rotation selon l'une quelconque des revendications précédentes, **caractérisé en ce qu'**un transmetteur de vitesse de rotation (16) et un capteur de vitesse de rotation (17) pour la mesure de la vitesse de rotation sont agencés sur l'arbre creux (1) à faible distance spatiale du transmetteur de vitesse de rotation (6) et du capteur de vitesse de rotation (7) de l'arbre intérieur (2).

5. Dispositif de mesure de la vitesse de rotation selon la revendication 4, **caractérisé en ce que** les capteurs de vitesse de rotation (7, 17) pour l'arbre intérieur (2) et l'arbre creux (1) sont agencés dans un boîtier de capteurs commun (20).

6. Dispositif de mesure de la vitesse de rotation selon la revendication 5, **caractérisé en ce que** les capteurs de vitesse de rotation (7, 17) sont agencés avec une électronique de mesure connexe dans un appareil de commande de boîte de vitesses (19).

7. Dispositif de mesure de la vitesse de rotation selon l'une quelconque des revendications précédentes, **caractérisé en ce que** la boîte de vitesses est une boîte de vitesses à couplage double, qui comprend deux boîtes de vitesses partielles qui peuvent être couplées alternativement au groupe motopropulseur d'un véhicule automobile.

8. Procédé de mesure de la vitesse de rotation sur des arbres de commande agencés coaxialement d'une boîte de vitesses en utilisant un dispositif de mesure de la vitesse de rotation qui mesure à travers au moins une ouverture (3 à 5) dans un arbre creux (1) la vitesse de rotation d'un arbre intérieur (2) inséré dans l'arbre creux (1), **caractérisé en ce que** le dispositif de mesure de la vitesse de rotation reconnaît, lors de la rotation de l'arbre creux (1), le début (14) de l'ouverture (3) traversant la zone de mesure (13) du dispositif de mesure de la vitesse de rotation et démarre donc avec la mesure de la vitesse de rotation sur l'arbre intérieur (2) et le dispositif de mesure de la vitesse de rotation établit la fin (15) de l'ouverture traversant la zone de mesure (13) et termine donc la mesure de la vitesse de rotation.

9. Procédé selon la revendication 8, **caractérisé en ce que** le dispositif de mesure de la vitesse de rotation détermine la fin (15) de l'ouverture (3) traversant la zone de mesure (13) par calcul en tenant compte de la vitesse de rotation et du diamètre de l'arbre creux (1) ainsi que de la longueur périphérique ou de l'angle de l'ouverture (3).

10. Procédé selon l'une quelconque des revendications 8 à 9, **caractérisé en ce que** l'on utilise pour la mesure de la vitesse de rotation sur l'arbre creux (1) les ouvertures (3 à 5) qui y sont prévues comme transmetteurs de vitesse de rotation.
